# EUROPÄISCHE PATENTSCHRIFT

(11) **EP 2 542 846 B1**
(45) Veröffentlichungstag und Bekanntmachung des Hinweises auf die Patenterteilung: **28.05.2014**
(21) Anmeldenummer: 11712151.7
(22) Anmeldetag: 02.03.2011
(51) Int. Cl.: F26B 21/08, B01D 53/26, B01D 53/06

(54) **EINRICHTUNG UND VERFAHREN ZUM TROCKNEN VON SCHÜTTGUT**
DEVICE AND METHOD FOR DRYING BULK MATERIAL
DISPOSITIF ET PROCÉDÉ DE SÉCHAGE DE PRODUITS EN VRAC

(30) Priorität: 03.03.2010 AT 3302010
(43) Veröffentlichungstag der Anmeldung: 09.01.2013
(73) Patentinhaber: WITTMANN KUNSTSTOFFGERÄTE GMBH, 1220 Wien (AT)
(72) Erfinder: FUX, Erhard, A-1230 Wien (AT)
(74) Vertreter: Krause, Peter
(86) Internationale Anmeldenummer: PCT/AT2011/000103
(87) Internationale Veröffentlichungsnummer: WO 2011/106813

(56) Entgegenhaltungen:
- EP-A1- 0 712 656
- AT-A4- 505 391
- US-A- 4 345 640
- US-A- 5 169 414
- US-B1- 6 257 318

## Beschreibung

Die Erfindung betrifft eine Einrichtung zum Trocknen von Schüttgut, insbesondere Feststoffen, wie Granulate, Pulver, Körner, Folien, Schnipsel, o. dgl., vorzugsweise Kunststoffgranulat, wobei ein von einem Luftstrom durchströmter Trocknungssilo vorgesehen ist und der Trocknungssilo zur Trocknung des aus dem Trocknungssilo austretenden Abluft-Luftstromes bzw. der Rückluft über ein Prozessgebläse mit einem, ein Trocken- bzw. Adsorptionsmittel enthaltenden, Radtrockner, der eine drehbare Trommel mit radialen Zellen aufweist, verbunden ist, wobei in dem Radtrockner der Abluft-Luftstrom getrocknet, das Adsorptionsmittel regeneriert und anschließend gekühlt wird und der Abluft-Luftstrom als Trocken-Luftstrom dem Trocknungssilo wieder zuführbar ist.

Zur Trocknung der aus dem Trocknungssilo austretenden Rückluft sind verschiedene Verfahren und Vorrichtungen bekannt.

Eines dieser bekannten Verfahren zeigt die DE 36 25 013 A1. Im Zuge dieses bekannten Verfahrens wird die aus dem Trocknungstrichter austretende Abluft in einem ein Adsorptionsmittel enthaltenden Trockner getrocknet und dem Schüttgut als Trockenluft wieder zugeführt.

Weiters ist aus der DE 197 57 537 A1 ein Verfahren und eine Vorrichtung zum Trocknen und Erhitzen von Luft, die zum Trocknen von Schüttgut dient, bekannt. Diese Vorrichtung besteht im Wesentlichen aus mindestens einer Trockenpatrone bzw. Trocknungszelle, einem nachgeordneten Lufterhitzer, einer nachgeordneten Trockengutkammer bzw. Trocknungssilo und einer nachgeordneten Kühlvorrichtung.

Ferner ist aus der DE 101 18 762 A1 ein Verfahren zur Regeneration feuchtigkeitsbeladener Prozessluft bekannt. Dabei wird die atmosphärische Luft aufgeheizt und der zu regenerierenden Trocknungspatrone zugeführt. Die anschließende Rückkühlung der Trocknungspatrone erfolgt mit einem aus der getrockneten Prozessluft abgezweigten Teilluftstrom.

Aus der EP 0 712 656 B1 ist ein Verfahren zum Trocknen feuchter Luft bekannt und aus der EP 740 956 A2 ein Verfahren und eine Vorrichtung zum Aufbereiten eines, insbesondere Feuchte, enthaltenden Adsorptionsmittels.

Darüber hinaus ist aus der DE 2 025 205 A1 eine Vorrichtung mit mehreren Kammern zur selektiven Adsorption von Molekülen bekannt.

Eine Einrichtung der eingangs aufgezeigten Art mit allen Merkmalen des Oberbegriffs des Anspruchs 1 ist aus der AT 505 391 B1 bekannt. Gemäß dieser Einrichtung wird der Abluft-Luftstrom einem, im Radtrockner vorgesehenen und mit dem Adsorptionsmittel verbundenen, Zuführkanal zugeführt, im Radtrockner umgelenkt, über das Adsorptionsmittel geführt und anschließend als Trockenluftstrom nochmals umgelenkt und in einem Abführkanal entgegen der Strömungsrichtung im Zuführkanal abgeleitet und dem Trocknungssilo zugeführt. Ein Nachteil dieses Radtrockners ist, dass durch die hohen Strömungswiderstände aufgrund der Umlenkungen hohe Drücke notwendig sind.

Alle oben genannten Vorrichtungen weisen vor allem die Nachteile auf, dass die Einrichtungen einer sehr aufwendigen Bauweise bedürfen und bei den Verfahren ein hoher Energieverbrauch für die Regeneration und Trocknung gegeben ist.

Aufgabe der Erfindung ist es, eine Einrichtung der eingangs zitierten Art zu schaffen, die einerseits die obigen Nachteile vermeidet und die anderseits sowohl in der Anschaffung, wie auch im Betrieb, global gesehen, die Wirtschaftlichkeit erhöht.

Die Aufgabe wird durch die Erfindung gelöst.

Die Erfindung ist dadurch gekennzeichnet, dass die einzelnen Zellen der Trommel des Radtrockners aus Blechen gebildet sind, wobei am radialen Außen- und Innenmantel der Trommel anliegende Klemmbleche einer Zelle U-förmigen Querschnitt aufweisen und axial an der Innenwand angeordnet sind und die Schenkel der U-förmigen Klemmbleche nach außen geneigt sind und als Trennwände der einzelnen Zellen vorgesehene Trennbleche durch die Klemmwirkung benachbarter Schenkel von zwei aneinander liegenden U-förmigen Klemmbleche positioniert sind und zellenweise abdichten. Mit der Erfindung ist es erstmals möglich, einen einfachen konstruktiven Aufbau mit einfachsten Materialkomponenten, nämlich Blechen, zu einer überaus wirtschaftlichen Lösung zu vereinen, deren Funktionsfähigkeit auch dem robusten Betrieb gerecht wird. Die mit einfachen Blechen hergestellte Innenkonstruktion der Trommel ist nicht nur verschleißarm, sondern natürlich auch wartungsarm. Durch die Positionierung der Trennbleche über die Klemmwirkung wird eine dichtungslose axiale Abdichtung der einzelnen Zellen erreicht. Es liegt auch auf der Hand, dass durch die Verarbeitung von einfachen Blechen mit simplen Blechbearbeitungsmaschinen eine rationelle, wirtschaftliche Fertigung möglich ist. Ein weiterer gravierender Vorteil dieser Blechkonstruktion im Inneren der Trommel ist darin zu sehen, dass alle Wärmeausdehnungen aufgrund der Temperaturunterschiede durch die elastische Konstruktion der Trommel aufgenommen werden.

Ein weiterer Vorteil dieser Blechkonstruktion ist darin zu sehen, dass bei einem betriebsnotwendigen Tausch des Adsorptionsmittels nur das Adsorptionsmittel an sich auf einer Deponie entsorgt werden muss. Das Trommelgehäuse mit seiner Innenkonstruktion in dem das Adsorptionsmittel im Betrieb beinhaltet ist, kann natürlich wieder verwendet werden. Durch diese Wiederbefüllung ist ein immenser Vorteil in Punkto Umweltbelastung gegeben. Ferner sind natürlich auch die Kosten einer derartigen Erneuerung drastisch reduziert.

Mit der Erfindung wird tadellose Qualität mit hoher Zuverlässigkeit sowie konsequente Funktionalität mit raffinierter Konstruktion zu einer optimalen Wirtschaftlichkeit verbunden.

Nach einer besonderen Ausgestaltung der Erfindung sind umfangsmäßig mindestens drei, vorzugsweise sechs, insbesondere 36, Zellen vorgesehen.

Dadurch wird in vorteilhafterweise ein kontinuierlicher Gesamtprozess möglich, wobei durch die kleinen räumlichen Einheiten ein optimaler gleichmäßiger Taupunkt über die Betriebszeit erreicht wird.

Gemäß einem besonderen Merkmal der Erfindung ist der Radtrockner in mindestens drei Kreissegmente geteilt, wobei der Bereich eines Kreissegments zur Trocknung bzw. Entfeuchtung des Abluft-Luftstromes, der Bereich des zweiten Kreissegments zum Heizen des Adsorptionsmittels und der Bereich des dritten Kreissegments zur Kühlung des Adsorptionsmittels dient. Durch diese Aufteilung in entsprechende Bereiche der Trommel wird eine Minimierung des Platzbedarfs erreicht, da den Verfahrensprozess unterbrechende Zwischenschritte, durch Leitungen zu den einzelnen Verfahrensschritten, entfallen. Ferner wird dadurch auch der Energiehaushalt des Gesamtprozesses optimiert.

Nach einem weiteren besonderen Merkmal der Erfindung beträgt der Bereich der Trocknung bzw. Entfeuchtung etwa 240 Bogengrade, der Bereich zum Heizen etwa 80 Bogengrade und der Bereich der Kühlung etwa 40 Bogengrade. Entsprechend dieser Vorgabe kann ein überaus energiesparender Betrieb - wie später noch eingehend aufgezeigt wird - geführt werden.

Gemäß einer Weiterbildung der Erfindung ist der Radtrockner an beiden axialen Enden mit je einem Deckel versehen, wobei jeder Deckel die Anschlüsse für die Luftführungen aufweist. Eine derartige Konstruktion des Radtrockners bringt eine geradlinige Durchströmung für alle Luftströmungen mit sich, wodurch geringste Druckverluste gegeben sind. Ferner wird auch der größtmögliche Querschnitt als Aktivzone genützt. Wie ja an sich bekannt, soll die Verweilzeit der Luft länger und somit die Strömungsgeschwindigkeit in der Aktivzone gering sein. Mit dieser Konstruktion des Radtrockners sind diese Bedingungen erfüllbar.

Nach einer Ausgestaltung der Erfindung sind die beiden Deckel stationär und zwischen den Deckeln und der rotierenden Trommel ist eine Laufscheibe mit einer Dichtung, insbesondere einer Sandwichdichtung, vorgesehen. Eine derartige Dichtung zwischen den stationären und dem rotierenden Teil des Radtrockners hat sich bestens bewährt, da sie Verschleißarmut mit Dichtelastizität vereint.

Gemäß einem ganz besonderen Merkmal der Erfindung ist der mittige Bereich des Radtrockners als Hohlwelle mit einer Wärmetauscherfunktion ausgebildet. Mit dieser intelligenten Konstruktion kann - wie später noch näher erklärt wird - Energie eingespart und der Wirkungsgrad erhöht werden.

Nach einer Ausgestaltung der Erfindung ist in der als Wärmetauscher ausgebildeten Hohlwelle ein Drahtgewebe oder Edelstahlwolle o. dgl. vorgesehen. Derartige Füllmaterialien haben sich für die Wärmetauscherfunktion bestens bewährt.

Der Erfindung liegt auch die Aufgabe zugrunde ein Verfahren zum Trocknen von Schüttgut zu schaffen, das einerseits die zum Stand der Technik zitierten Nachteile vermeidet und anderseits die Wirtschaftlichkeit im Betrieb erhöht.

Auch diese Aufgabe wird durch die Erfindung gelöst.

Das Verfahren zum Trocknen von Schüttgut gemäß der Erfindung ist dadurch gekennzeichnet, dass die Trocknungs- bzw. Entfeuchtungsphase für den Abluft-Luftstrom und vorzugsweise die Kühlung des Adsorptionsmittels parallel, insbesondere kontinuierlich im Dauerbetrieb, ablaufen und die Regenerationsphase mit dem Aufheizen des Adsorptionsmittels im Intervallbetrieb durchgeführt wird, wobei die Trommel des Radtrockners in der Kühl- bzw. Regenerationsphase gestoppt wird und nach Abschluss der Kühl- bzw. Regenerationsphase um einen wählbaren Bereich, vorzugsweise dem Kühlbereich, weitergetaktet wird und dass der Bereich zum Heizen mindestens gleich groß oder größer, vorzugsweise um das zweifache, als der Bereich des Kühlens festgelegt wird. Mit dem erfindungsgemäßen Verfahren ist es erstmals möglich, den Energieverbrauch zu minimieren.

Zeolith braucht zum Regenerieren, also zum Entfeuchten und Trocknen eine Temperatur über 200 °C. Je höher die Temperatur wäre, umso besser würde der Wirkungsgrad sein. Für die Regeneration einer gewissen Zeolithmenge ist daher ein bestimmter Energieaufwand, abhängig von Temperatur, Zeit und Luftstrom, notwendig. Auf Grund des Feuchtigkeitsgrades des Zeoliths kann daher der optimale Energieverbrauch bestimmt werden. Eine Energiezufuhr über den Sättigungsbereich hinaus ist nutzlos. In Hinblick auf die Temperaturbeständigkeit der im Prozess eingebundenen Maschinenteile und Komponenten, wie Dichtungen, die bei etwa 280 °C liegt, ist aber der Höhe der Temperatur Grenzen gesetzt.

Wie gesagt, ist der Energieverbrauch des Trockenvorganges sehr stark von der Heizleistung in der Regenerationsphase bestimmt. Entsprechend den zum Stand der Technik zählenden Verfahren und deren Philosophie war es, einen gleichmäßigen Taupunkt zu erreichen. Dieser Forderung nachkommend, wurde die Regenerationsphase im Dauerbetrieb gefahren.

Entsprechend der der Erfindung zugrunde liegenden Philosophie, nämlich den Qualitätsstandard der Trockenluft zu bestehenden Anlagen zumindest zu halten, jedoch die Wirtschaftlichkeit zu erhöhen, wird bewusst im Trocknungsverfahren zwischen stark und weniger stark belasteten Trocknungsaufgaben unterschieden. Zufolge dieses Schlusses wird gemäß dem vorliegenden erfindungsgemäßen Verfahren die Regenerationsphase bei weniger stark belasteten Trocknungsaufgaben im Intervall-Betrieb gefahren. Das heißt, die Heizung zum Aufheizen des Adsorptionsmittels und gegebenenfalls das zugehörige Gebläse werden bewusst einen Zeitraum abgeschaltet. Mit einem derartigen Intervall-Betrieb verläuft die Kurve für den Taupunkt nur unwesentlich abweichender von der Idealkurve, wobei jedoch die Abweichung für den Qualitätsstandard nicht spürbar ist.

Insbesondere in tropischen Gebieten sind Verfahren mit Patronen zum Trocknen aufgrund der Gefahr von Leckageluft nicht gefragt. In diesen Gebieten kommen somit Radtrockner der eingangs erwähnten Art zum Einsatz. Um nun auch derartige Radtrockner im Betrieb noch wirtschaftlicher betreiben zu können, wird das vorliegende Verfahren zur Anwendung gebracht. Generell haben Radtrockner den Vorteil, dass sie autark und leckagefrei ihren Betrieb gestalten.

Nach einem besonderen Merkmal der Erfindung beträgt der Bereich der Trocknung bzw. Entfeuchtung etwa 240 Bogengrade, der Bereich zum Heizen etwa 80 Bogengrade und der Bereich der Kühlung etwa 40 Bogengrade. Durch diese Festlegung der Bereiche, also den Regenerationsbereich gegenüber dem Kühlbereich zu verdoppeln, wird die Möglichkeit geschaffen, die Regenerationsleistungsdauer bzw. Heizleistung um 50 % zu reduzieren. Die Regenerationsphase wird nur jede zweite Kühlphase in Betrieb genommen.

Gemäß Messungen im Testbetrieb wird mit diesem ökonomischen Verfahren etwa 38% des Energieverbrauches der Anlage eingespart.

Gemäß einem weiteren besonderen Merkmal der Erfindung wird der Luftstrom für die Kühlung nach der Trocknungs- bzw. Entfeuchtungsphase aus dem Abluft-Luftstrom abgezweigt. Durch diese Maßnahme kann der Kühleffekt aufgrund der trockenen Luft verbessert werden. Eine etwaige Wiederbefeuchtung durch Außenluft wird vermieden.

Nach einer besonderen Ausgestaltung der Erfindung wird ein mittiger, hohlwellenartig ausgebildeter Bereich des Radtrockners als Wärmetauscher verwendet und ein für die Regeneration des Trocken- bzw. Adsorptionsmittel notwendiger, in einem Regenerationsgebläse erzeugter, Regenerations-Luftstrom vor dessen Eintritt in den Radtrockner durch diese Hohlwelle geführt. Diese raffinierte, innovative Ausgestaltung hat eine weitere Energieverbrauchsminimierung der Anlage zur Folge.

Die Erfindung wird an Hand eines Ausführungsbeispieles, das in der Zeichnung dargestellt ist, näher erläutert.

Es zeigen:
Fig. 1 eine Ansicht eines Radtrockners,
Fig. 2 ein Schema der Luftführungen,
Fig. 3 eine Draufsicht auf den Radtrockner mit abgenommenen Deckel und
Fig. 4 einen Ausschnitt mit Zellen einer Trommel des Radtrockners.

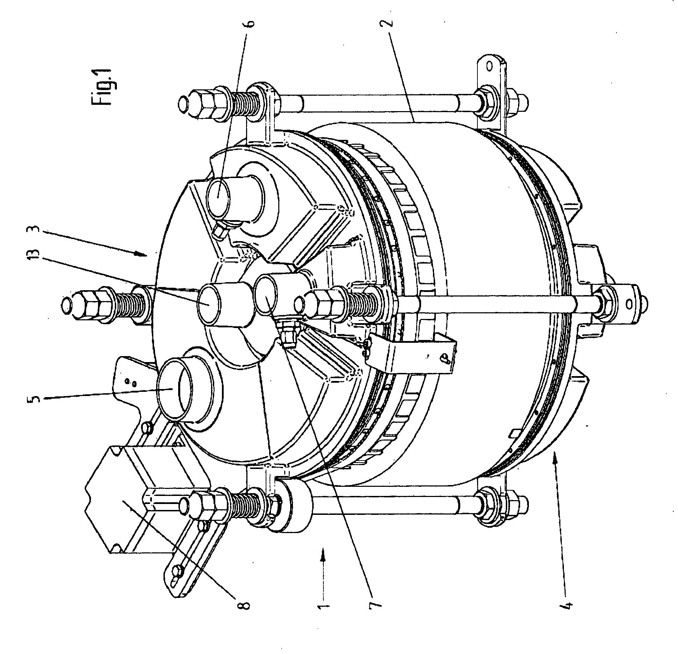

Gemäß der Fig. 1 besteht der Radtrockner 1 aus einer drehbaren Trommel 2 die an beiden axialen Enden mit je einem Deckel 3, 4 versehen ist, wobei jeder Deckel 3, 4 die Anschlüsse für die Luftführungen 5, 6, 7 aufweist. Die Trommel 2 ist mit einem Riementrieb über einem Antriebsmotor 8 drehbar, wobei die beiden Deckel 3, 4 stationär sind. Der mittige Bereich des Radtrockners 1 ist als Hohlwelle ausgebildet und hat die Funktion eines Wärmetauschers 13.

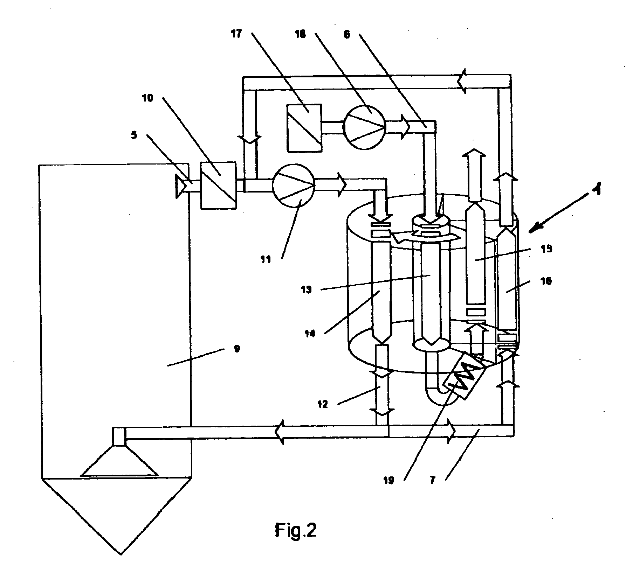

Der Radtrockner 1 ist Teil einer Einrichtung zum Trocknen von Schüttgut, insbesondere Feststoffen, wie Granulate, Pulver, Körner, Folien, Schnipsel, o. dgl., vorzugsweise Kunststoffgranulat. Die Einrichtung umfasst weiters einen von einem Luftstrom durchströmten Trocknungssilo 9. Die Luftführung ist in Fig. 2 schematisch aufgezeigt. Zur Trocknung, in der Trocknungs- bzw. Entfeuchtungsphase 14, des aus dem Trocknungssilo 9 austretenden Abluft-Luftstromes 5 bzw. der Rückluft wird der Abluft-Luftstrom 5 über ein Filter 10 und ein Prozessgebläse 11 mit dem, ein Trocken- bzw. Adsorptionsmittel enthaltenden, Radtrockner 1 verbunden. In dem Radtrockner 1 wird der Abluft-Luftstrom 5 getrocknet. Der Abluft-Luftstrom 5 wird als Trocken-Luftstrom 12 dem Trocknungssilo 9 wieder zugeführt.

Das Adsorptionsmittel wird im Radtrockner 1, in der Regenerationsphase 15 regeneriert und anschließend, in der Kühlphase 16, gekühlt. Zur Regeneration des Adsorptionsmittels wird ein über ein Filter 17 und ein Regenerationsgebläse 18 der Regenerations-Luftstrom 6 über den Wärmetauscher 13 geführt, über eine Heizung 19 aufgeheizt und dann dem Radtrockner 1 zugeführt. Zur anschließenden Kühlung des Adsorptionsmittels wird aus dem Trocken-Luftstrom 12 ein Teil als Luftstrom 7 für die Kühlung abgezweigt und dem Radtrockner 1 zugeführt.

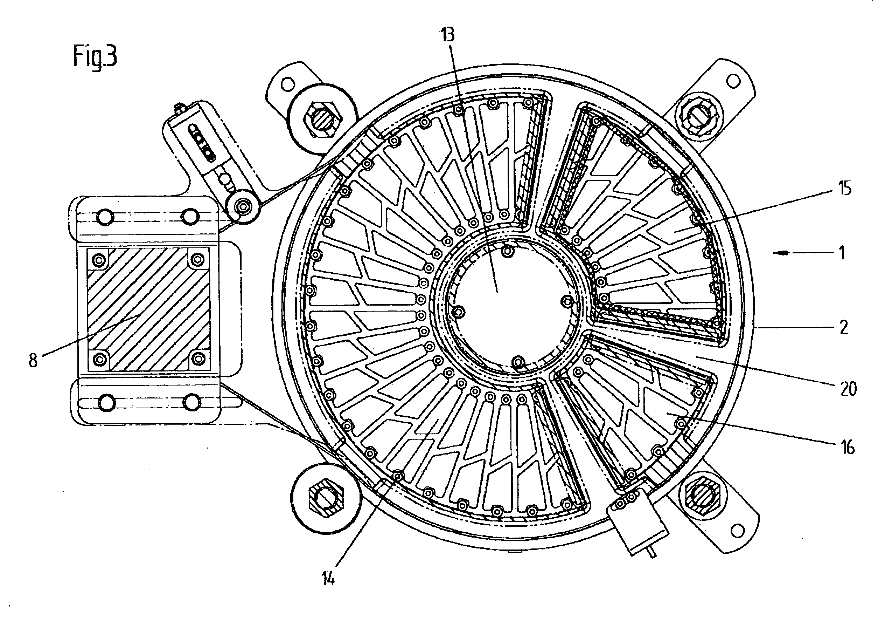

Gemäß der Fig. 3 ist der oben offene Radtrockner 1, also ohne Deckel 3, gezeigt. Die Trommel 2 wird über den Antriebsmotor 8 und dem Riementrieb gedreht bzw. getaktet. Der Radtrockner 1 bzw. die Trommel 2 ist in mindestens drei Kreissegmente geteilt ist, wobei der Bereich eines Kreissegments zur Trocknung bzw. Entfeuchtung, also die Trocknungs- bzw. Entfeuchtungsphase 14, für den Abluft-Luftstrom 5, der Bereich des zweiten Kreissegments zum Heizen, die Regenerationsphase 15, des Adsorptionsmittels und der Bereich des dritten Kreissegments zur Kühlung, der Kühlphase 16, des Adsorptionsmittels dient. Im mittigen Bereich des Radtrockners 1 ist der Wärmetauscher 13. In der als Wärmetauscher 13 ausgebildeten Hohlwelle kann ein Drahtgewebe oder Edelstahlwolle o. dgl. vorgesehen sein. Der Bereich der Trocknung bzw. Entfeuchtung beträgt etwa 240 Bogengrade, der Bereich zum Heizen etwa 80 Bogengrade und der Bereich der Kühlung etwa 40 Bogengrade.

Zwischen den Deckeln 3, 4 und der rotierenden Trommel 2 ist eine Laufscheibe mit einer Dichtung 20, insbesondere einer Sandwichdichtung, die als elastisches Ausgleichselement dient, vorgesehen.

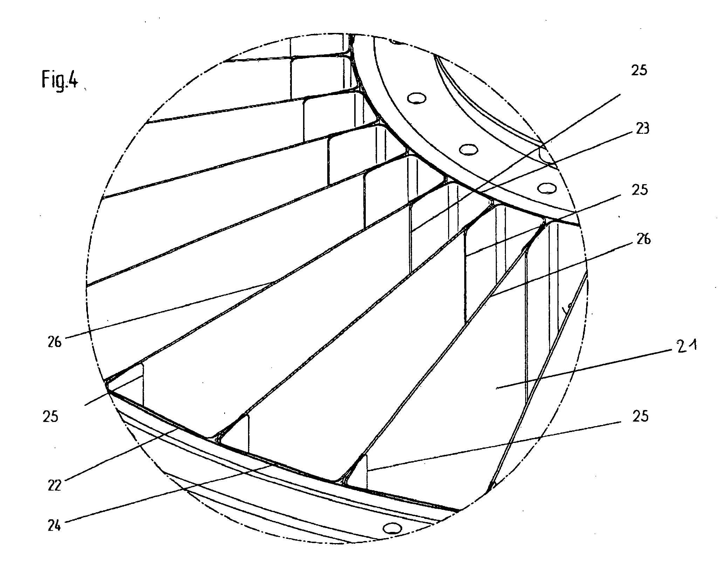

Gemäß der Fig. 4 ist in einer Detailansicht das Innenleben der Trommel 2 gezeigt. Die Trommel 2 ist in einzelne Zellen 21 unterteilt, wobei die einzelnen Zellen 21 der Trommel 2 des Radtrockners 1 aus Blechen gebildet sind. Am radialen Außen- und Innenmantel 22, 23 der Trommel 2 liegen Klemmbleche 24 an, die U-förmigen Querschnitt aufweisen. Die Klemmbleche 24 sind axial an der Innenwand der Trommel 2, also am Außenmantel 22 und am Innenmantel 23 angeordnet. Die Schenkel 25 der U-förmigen Klemmbleche 24 sind nach außen geneigt, so dass sie nach ihrem Einsetzen in die Trommel 2 mit Spannung an den benachbarten Schenkel 25 des benachbarten Klemmbleches 24 drücken. Als Trennwände der einzelnen Zellen 21 sind Trennbleche 26 vorgesehen. Durch die Klemmwirkung benachbarter Schenkel 25 von zwei aneinander liegenden U-förmigen Klemmblechen 24 werden die Trennbleche 26 positioniert und dichten zellenweise ab. In diesem aufgezeigten Ausführungsbeispiel sind umfangsmäßig 36 Zellen vorgesehen. Natürlich würden im Extremfall auch drei, für die drei Phasen, oder sechs Zellen 21 denkbar sein.

Nachstehend wird - unter Zuziehung der Fig. 2 - ein Verfahren zum Trocknen von Schüttgut aufgezeigt, dass mit der oben beschriebenen Einrichtung durchführbar ist und das die Wirtschaftlichkeit der Gesamtanlage erhöht.

Die Trocknungs- bzw. Entfeuchtungsphase 14 für den Abluft-Luftstrom 5 wird kontinuierlich im Dauerbetrieb geführt. Vorzugsweise wird auch die Kühlphase 16 des Adsorptionsmittels parallel im Dauerbetrieb zur Trocknungs- bzw. Entfeuchtungsphase 14, durchgeführt. Die Regenerationsphase 15 mit dem Aufheizen des Adsorptionsmittels wird im Intervallbetrieb durchgeführt.

Durch die Auslegung, dass der Bereich für die Regenerationsphase 15 zumindest gleich, vorzugsweise jedoch größer ist als der Bereich für die Kühlphase 16, kann die Heizung 19 bzw. das Regenerationsgebläse 18 abgeschaltet werden.

Bei der bevorzugten Ausführungsform, bei der der Regenerationsbereich die doppelte Anzahl von Zellen 21 wie der Kühlbereich umfasst, kann die Regenerationsphase 15 jede zweite Kühldauer still gelegt werden, wodurch eine Einsparung von 50% der Energie erreicht wird.

Die Trommel 2 des Radtrockners 1 wird immer in der Kühl- 16 bzw. Regenerationsphase 15 gestoppt. Nach Abschluss der Kühl- 16 bzw. Regenerationsphase 15 wird um den Kühlbereich weitergetaktet.

Gemäß der nachstehenden Tabelle 1 wird dieser Vorgang bei einer Trommel 2 mit 36 Zellen 21 verdeutlicht.

Die Taktung der Trommel 2 einmal um fünf und das nächste um vier Zellen 21 ergibt sich daraus, dass die Grenzzelle zwischen den einzelnen Phasen in der Trommel 2 nicht in der Aktivzone liegen (siehe Fig. 3).

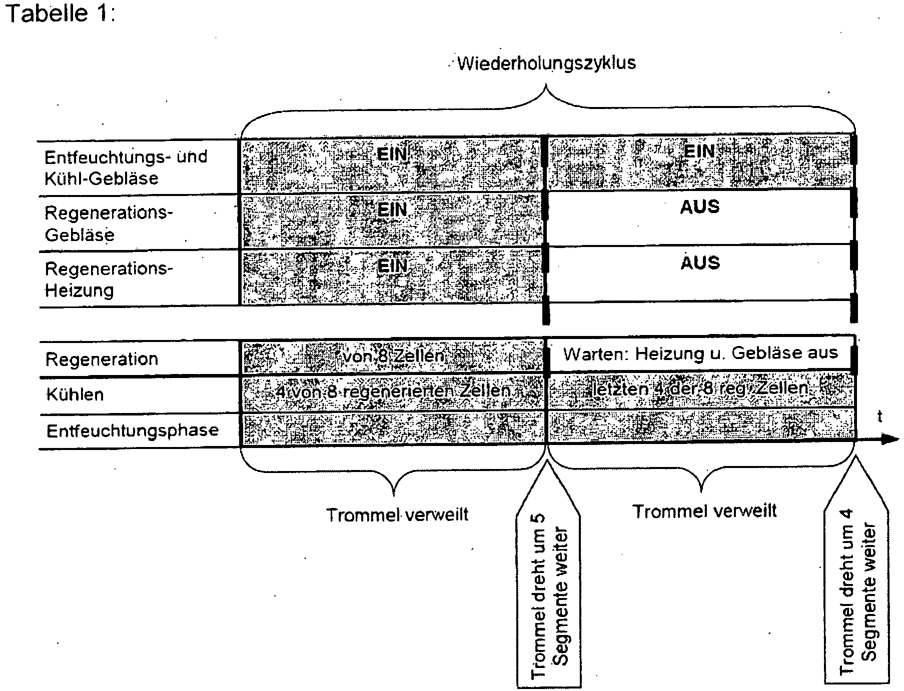

## Patentansprüche

1. Einrichtung zum Trocknen von Schüttgut, insbesondere Feststoffen, wie Granulate, Pulver, Körner, Folien, Schnipsel, o. dgl., vorzugsweise Kunststoffgranulat, wobei ein von einem Luftstrom durchströmter Trocknungssilo (9) vorgesehen ist und der Trocknungssilo (9) zur Trocknung des aus dem Trocknungssilo (9) austretenden Abluft-Luftstromes (5) bzw. der Rückluft über ein Prozessgebläse (11) mit einem, ein Trocken- bzw. Adsorptionsmittel enthaltenden, Radtrockner (1), der eine drehbare Trommel (2) mit radialen Zellen (21) aufweist, verbunden ist, wobei in dem Radtrockner (1) der Abluft-Luftstrom (5) getrocknet, das Adsorptionsmittel regeneriert und anschließend gekühlt wird und der Abluft-Luftstrom (5) als Trocken-Luftstrom (12) dem Trocknungssilo (9) wieder zuführbar ist, **dadurch gekennzeichnet, dass** die einzelnen Zellen (21) der Trommel (2) des Radtrockners (1) aus Blechen gebildet sind, wobei am radialen Außen- (22) und Innenmantel (23) der Trommel (2) anliegende Klemmbleche (24) einer Zelle (21) U-förmigen Querschnitt aufweisen und axial an der Innenwand angeordnet sind und die Schenkel (25) der U-förmigen Klemmbleche (24) nach außen geneigt sind und als Trennwände der einzelnen Zellen (21) vorgesehene Trennbleche (26) durch die Klemmwirkung benachbarter Schenkel (25) von zwei aneinander liegenden U-förmigen Klemmbleche (24) positioniert sind und zellenweise abdichten.

2. Einrichtung nach Anspruch 1, **dadurch gekennzeichnet, dass** umfangsmäßig mindestens drei, vorzugsweise sechs, insbesondere 36, Zellen (21) vorgesehen sind.

3. Einrichtung nach Anspruch 1 oder 2, **dadurch gekennzeichnet, dass** der Radtrockner (1) in mindestens drei Kreissegmente geteilt ist, wobei der Bereich eines Kreissegments zur Trocknung bzw. Entfeuchtung des Abluft-Luftstromes (5), der Bereich des zweiten Kreissegments zum Heizen des Adsorptionsmittels und der Bereich des dritten Kreissegments zur Kühlung des Adsorptionsmittels dient.

4. Einrichtung nach einem der Ansprüche 1 bis 3, **dadurch gekennzeichnet, dass** der Bereich der Trocknung bzw. Entfeuchtung etwa 240 Bogengrade, der Bereich zum Heizen etwa 80 Bogengrade und der Bereich der Kühlung etwa 40 Bogengrade beträgt.

5. Einrichtung nach einem der Ansprüche 1 bis 4, **dadurch gekennzeichnet, dass** der Radtrockner (1) an beiden axialen Enden mit je einem Deckel (3, 4) versehen ist, wobei jeder Deckel (3, 4) die Anschlüsse für die Luftführungen (5, 6, 7) aufweist.

6. Einrichtung nach Anspruch 5, **dadurch gekennzeichnet, dass** die beiden Deckel (3, 4) stationär sind und zwischen den Deckeln (3, 4) und der rotierenden Trommel (2) eine Laufscheibe mit einer Dichtung (20), insbesondere einer Sandwichdichtung, vorgesehen ist.

7. Einrichtung nach einem der Ansprüche 1 bis 6, **dadurch gekennzeichnet, dass** der mittige Bereich des Radtrockners (1) als Hohlwelle mit einer Wärmetauscherfunktion ausgebildet ist.

8. Einrichtung nach Anspruch 7, **dadurch gekennzeichnet, dass** in der als Wärmetauscher (13) ausgebildeten Hohlwelle ein Drahtgewebe oder Edelstahlwolle o. dgl. vorgesehen ist.

9. Verfahren zum Trocknen von Schüttgut unter Verwendung der Einrichtung nach einem der Ansprüche 1 bis 8, < **dadurch gekennzeichnet, dass** die Trocknungs- bzw. Entfeuchtungsphase (14) für den Abluft-Luftstrom (5) und vorzugsweise die Kühlung des Adsorptionsmittels parallel, insbesondere kontinuierlich im Dauerbetrieb, ablaufen und die Regenerationsphase (15) mit dem Aufheizen des Adsorptionsmittels im Intervallbetrieb durchgeführt wird, wobei die Trommel (2) des Radtrockners (1) in der Kühl- (16) bzw. Regenerationsphase (15) gestoppt wird und nach Abschluss der Kühl- (16) bzw. Regenerationsphase (15) um einen wählbaren Bereich, vorzugsweise dem Kühlbereich, weitergetaktet wird und dass der Bereich zum Heizen mindestens gleich groß oder größer, vorzugsweise um das zweifache, als der Bereich des Kühlens festgelegt wird.

10. Verfahren nach Anspruch 9, **dadurch gekennzeichnet, dass** der Bereich der Trocknung bzw. Entfeuchtung etwa 240 Bogengrade, der Bereich zum Heizen etwa 80 Bogengrade und der Bereich der Kühlung etwa 40 Bogengrade beträgt.

11. Verfahren nach Anspruch 9 oder 10, **dadurch gekennzeichnet, dass** der Luftstrom (7) für die Kühlung nach der Trocknungs- bzw. Entfeuchtungsphase (14) aus dem Abluft-Luftstrom (12) abgezweigt wird.

12. Verfahren nach einem der Ansprüche 9 bis 11, **dadurch gekennzeichnet, dass** ein mittiger, hohlwellenartig ausgebildeter Bereich des Radtrockners (1) als Wärmetauscher (13) verwendet wird und ein für die Regeneration des Trocken- bzw. Adsorptionsmittel notwendiger, in einem Regenerationsgebläse (18) erzeugter, Regenerations-Luftstrom (6) vor dessen Eintritt in den Radtrockner (1) durch diese Hohlwelle geführt wird.

## Claims

1. Device for drying bulk goods, in particular solids, such as granular materials, powders, grains, films, shreds, or the like, preferably plastic granular material, wherein a drying silo (9), through which an air flow flows, is provided and the drying silo (9) for drying the exhaust air flow (5) exiting the drying silo (9) or the returning air is connected by means of a process fan (11) to a wheel drier (1) that contains a drying or adsorbing agent and that has a rotatable drum (2) having radial cells (21), wherein the exhaust air flow (5) is dried in the wheel drier (1), the adsorbent is regenerated and subsequently cooled, and the exhaust air flow (5) can be reintroduced to the drying silo (9) as drying air flow (12), **characterised in that** the individual cells (21) of the drum (2) of the wheel drier (1) are formed by plates, wherein clamping plates (24) of a cell (21) lying against the radial outer (22) and inner jackets (23) of the drum (2) have a U-shaped cross-section and are arranged axially on the inner wall and the legs (25) of the U-shaped clamping plates (24) are tilted outwardly, and separating plates (26) provided as partitions of the individual cells (21) are positioned by the clamping effect of adjacent legs (25) of two U-shaped clamping plates (24) lying against each other and seal off the cells from each other.

2. Device in accordance with Claim 1, **characterised in that** an amount of at least three, preferably six, in particular 36 cells (21) are provided.

3. Device in accordance with Claim 1 or 2, **characterised in that** the wheel drier (1) is divided into at least three wheel segments, wherein the region of one wheel segment serves for drying or dehumidifying the exhaust air flow (5), the region of the second wheel segment serves for heating the adsorbent, and the region of the third wheel segment serves for cooling the adsorbent.

4. Device in accordance with one of Claims 1 to 3, **characterised in that** the drying or dehumidifying region amounts to approximately 240 arc degrees, the heating region amounts to approximately 80 arc degrees and the cooling region amounts to approximately 40 arc degrees.

5. Device in accordance with one of Claims 1 to 4, **characterised in that** the wheel drier (1) is provided with one lid (3, 4) each at both axial ends, wherein each lid (3, 4) comprises the connections for the air conducts (5, 6, 7).

6. Device in accordance with Claim 5, **characterised in that** the two lids (3, 4) are stationary and a rotor disk with a seal (20), in particular a sandwich seal, is provided between the lids (3, 4) and the rotating drum (2).

7. Device in accordance with one of Claims 1 to 6, **characterised in that** the central region of the wheel drier (1) is designed as hollow shaft with a heat exchanger function.

8. Device in accordance with Claim 7, **characterised in that** a wire cloth or stainless steel wool or the like is provided in the hollow shaft designed as heat exchanger (13).

9. Method for drying bulk goods using the device in accordance with one of Claims 1 to 8, **characterised in that** the drying or dehumidifying phase (14) for the exhaust air flow (5) and preferably the adsorbent cooling occur in parallel, in particular in a continuous manner during permanent operation, and the regenerating phase (15) with the adsorbent heating is carried out at intervals during the operation, whereby the drum (2) of the wheel drier (1) is stopped in the cooling (16) or regenerating phase (15) and advanced to a selectable region, preferably the cooling region, after the cooling (16) or regenerating phase (15) finishes, and that the heating region is defined at least equal to or greater, preferably double the amount, than the cooling region.

10. Method in accordance with Claim 9, **characterised in that** the drying or dehumidifying region amounts to approximately 240 arc degrees, the heating region amounts to approximately 80 arc degrees and the cooling region amounts to approximately 40 arc degrees.

11. Method in accordance with Claim 9 or 10, **characterised in that** the air flow (7) for cooling is branched off from the exhaust air flow (12) after the drying or dehumidifying phase (14).

12. Method in accordance with one of Claims 9 to 11, **characterised in that** a central region of the wheel dryer (1) that is designed like a hollow shaft is used as heat exchanger (13), and a regeneration air flow (6) required for regenerating the drying or adsorbing agent and produced in a regenerating fan (18) is conducted through this hollow shaft before its entry into the wheel dryer (1).

## Revendications

1. Dispositif de séchage de produits en vrac, notamment de matières solides comme des granulés, de la poudre, des grains, des feuilles, des copeaux ou équivalent, de préférence des granulés en matière plastique, selon lequel une trémie sécheuse (9) parcourue par un flux d'air est prévue et la trémie sécheuse (9) servant au séchage du flux d'air sortant (5) de la trémie sécheuse (9) ou de l'air évacué par un ventilateur de process (11) est reliée à un séchoir rotatif (1) contenant un produit desséchant ou absorbant et comportant un tambour rotatif (2) avec des cellules radiales (21), le flux d'air sortant (5) étant séché et l'adsorbant refroidi puis régénéré dans le séchoir rotatif (1), et le flux d'air sortant (5) pouvant être réintroduit dans la trémie sécheuse (9) comme flux d'air sec (12), **caractérisé par le fait que** les cellules individuelles (21) du tambour (2) du séchoir rotatif (1) sont en tôles, les parois radiales extérieure (22) et intérieure (23) du tambour (2) adjacentes des plaques de serrage (24) d'une cellule (21) comportant des sections transversales en forme de U et étant disposées selon l'axe sur la paroi interne, les pattes (25) des plaques de serrage en forme de U (24) étant inclinées vers l'extérieur et des séparateurs (26) prévus comme parois de séparation des cellules individuelles (21) étant positionnés et permettant d'étanchéifier les cellules en serrant les pattes (25) adjacentes des deux plaques de serrage en forme de U adjacentes (24).

2. Dispositif selon la revendication 1, **caractérisé par le fait que** au moins trois, de préférence six, exceptionnellement 36, cellules (21) sont prévues sur la circonférence.

3. Dispositif selon la revendication 1ou 2, **caractérisé par le fait que** le séchoir rotatif (1) est divisé en au moins trois segments circulaires, la zone du premier segment circulaire étant destinée au séchage ou à la déshydratation du flux d'air sortant (5), la zone du deuxième segment circulaire à la mise en chauffe de l'adsorbant et la zone du troisième segment circulaire au refroidissement de l'adsorbant.

4. Dispositif selon la revendication 1 ou 3, **caractérisé par le fait que** la zone destinée au séchage ou à la déshydratation est d'environ 240 degrés d'arc, la zone destinée à la mise en chauffe d'environ 80 degrés d'arc et la zone destinée au refroidissement d'environ 40 degrés d'arc.

5. Dispositif selon les revendications 1 à 4, **caractérisé par le fait que** le séchoir rotatif (1) est prévu avec un couvercle (3,4) aux deux extrémités axiales, chaque couvercle (3,4) disposant de raccordements pour les conduites d'air (5, 6, 7).

6. Dispositif selon la revendication 5, **caractérisé par le fait que** les deux couvercles (3, 4) sont stationnaires et qu'une rondelle munie d'un joint d'étanchéité (20), notamment un joint en sandwich, est prévue entre les couvercles (3, 4) et le tambour rotatif (2).

7. Dispositif selon les revendications 1 à 6, **caractérisé par le fait que** la zone centrale du séchoir rotatif (1) est en forme d'arbre creux et sert d'échangeur de chaleur.

8. Dispositif selon la revendication 7, **caractérisé par le fait que** dans l'arbre creux servant d'échangeur de chaleur (13), un treillis métallique, une lainede d'acier ou équivalent est prévu.

9. Procédé de séchage de produits en vrac en utilisant le dispositif selon les revendications 1 à 8, **caractérisé par le fait que** la phase de déshydratation ou de séchage (14) du flux d'air sortant (5) et, de préférence, le refroidissement de l'adsorbant se déroulent simultanément et en continu, et que la phase de régénération (15) s'effectue à intervalles avec la mise en chauffe de l'adsorbant, le tambour (2) du séchoir rotatif (1) étant arrêté pendant la phase de refroidissement (16) ou de régénération (15) et redémarré à la fin de la phase de refroidissement (16) ou de régénération (15) dans une zone choisie, de préférence la zone de refroidissement, et que la zone destinée à la mise en chauffe soit au moins égale ou plus grande, idéalement deux fois plus grande, que la zone destinéeaurefroidissement.

10. Procédé selon la revendication 9, **caractérisé par le fait que** la zone destinée au séchage ou à la déshydratation est d'environ 240 degrés d'arc, la zone destinée à la mise en chauffe d'environ 80 degrés d'arc et la zone destinée au refroidissement d'environ 40 degrés d'arc.

11. Procédé selon la revendication 9 ou 10, **caractérisé par le fait que** le flux d'air (7) destiné au refroidissement après la phase de séchage ou de déshydratation (14) provient du flux d'air sortant (12).

12. Procédé selon les revendications 9 à 11, **caractérisé par le fait qu'**une zone centrale en forme d'arbre creux du séchoir rotatif (1) est utilisée comme échangeur de chaleur (13) et qu'un flux d'air de régénération (6), produit dans un ventilateur de régénération (18), nécessaire pour la régénération du produit desséchant ou adsorbant passe par cet arbre creux avant d'entrer dans le séchoir rotatif (1).
